# Europäisches Patentamt
## European Patent Office
## Office européen des brevets

(19)

(11) Veröffentlichungsnummer: **0 135 173**
**B1**

(12) # EUROPÄISCHE PATENTSCHRIFT

(45) Veröffentlichungstag der Patentschrift:
08.03.89

(51) Int. Cl.⁴: **G 06 F 9/46**

(21) Anmeldenummer: 84110013.4

(22) Anmeldetag: 22.08.84

(54) **Verfahren und Einrichtung zum Vermeiden von globalen Systemverklemmungen in verteilten Datenbank-Systemen.**

(30) Priorität: 24.08.83 DE 3330529

(43) Veröffentlichungstag der Anmeldung:
27.03.85 Patentblatt 85/13

(45) Bekanntmachung des Hinweises auf die Patenterteilung:
08.03.89 Patentblatt 89/10

(84) Benannte Vertragsstaaten:
AT BE CH DE FR GB IT LI NL SE

(73) Patentinhaber: **Siemens Aktiengesellschaft Berlin und München, Wittelsbacherplatz 2, D-8000 München 2 (DE)**

(72) Erfinder: **Scherg, Winfried, Dipl.- Phys., Georgenschwaigstrasse 40, D-8000 München 40 (DE)**

(56) Entgegenhaltungen:
INFORMATIK-SPEKTRUM, Heft 4, 1981, Seiten 175-184,261-270, Springer-Verlag; P. DADAM: "Synchronisation in verteilten Datenbanken: Ein Überblick"
COMPUTING SURVEYS, Band 13, Nr. 2, Juni 1981, Seiten 149-183, ACM; W.H. KOHLER: "A survey of techniques for synchronization and recovery in decentralized computer systems"
IEEE TRANSACTIONS ON SOFTWARE ENGINEERING, Band SE-8, Nr. 6, November 1982, IEEE, New York, US; G.S. HO et al.: "Protocols for deadlock detection in distributed database systems"
ANGEWANDTE INFORMATIK. APPLIED INFORMATICS, Band 26, Nr. 2, Februar 1984, Seiten 60-61, Friedr. Vieweg & Sohn Verlagsgesellschaft mbH, Wiesbaden, DE; W. SCHERG: "Ein einfacher Algorithmus zur Auflösung von Deadlocks in

(56) Entgegenhaltungen: (Fortsetzung)
verteilten Datenbanksystemen"

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein Verfahren und eine Einrichtung zum Vermeiden von globalen Systemverklemmungen bei der Verarbeitung von globalen Transaktionen in verteilten Datenbank-Systemen mit mehreren Knoten, von denen jeder mit Einrichtungen für die Vergabe von Sperren an die lokalen Objekte, für das Prüfen und Verwalten von lokalen Wartebeziehungen laufender Transaktionen oder selbständiger Teile (Teiltransaktionen) derselben und für das Rücksetzen von Transaktionen ausgerüstet ist, durch Zeitablaufprüfungen.

Bei der Realisierung von verteilten Datenbank-Systemen stellt sich eine Reihe von technischen Problemen. Eines dieser Probleme besteht in der Synchronisation konkurrierender globaler Transaktionen, insbesondere im Vermeiden von globalen Systemverklemmungen (deadlock), weil z. B. zwei oder mehr Transaktionen wechselseitig auf die Freigabe gesperrter Objekte warten, um selbst weiterarbeiten zu können - "Informatik-Spektrum", Springer Verlag, 1981, Heft 4, Seiten 175 bis 184 und 261 bis 270 oder "Computing Surveys", Vol. 13, No 2, June 1981. Seiten 149 bis 183.

Zu dem genannten Zweck sind bereits eine ganze Reihe von Verfahren entwickelt worden. Eines dieser Verfahren besteht in einer Art Zeitablaufüberwachung im jeweiligen Ursprungsknoten, indem eine Transaktion nach Überschreiten einer vorgegebenen Wartezeit ohne Rückantwort einfach abgebrochen wird, wobei mit jedem Abbruch ein Rücksetzen von Transaktionen und eine Wiederholung verbunden ist. Bei einem solchen Verfahren kann nicht ausgeschlossen werden, daß nur deshalb eine Zeitüberschreitung stattfindet, weil eben die augenblickliche Systemlast zu hoch ist, ohne daß die Gefahr einer Systemverklemmung gegeben ist. Das damit verbundene, aber unnötige Rücksetzen von Transaktionen und insbesondere die dadurch bedingte Wiederholung vergrößern dann noch die bestehende Systemlast - man siehe z. B. Informatik-Spektrum, Seite 182, Abschn. 3.3.1 oder Computing-Surveys, Seite 157, letzter Absatz der linken Spalte.

Andere Verfahren erfordern einen zusätzlichen Informationsaustausch zwischen den einzelnen Knoten.

Aufgabe der Erfindung ist es daher, konkurrierende globale Transaktionen so zu steuern, daß ohne zusätzlichen Informationsaustausch zwischen den einzelnen Knoten und ohne wesentliche zusätzliche Belastung des Systems globale Systemverklemmungen und das unnötige Rücksetzen von Transaktionen weitgehend vermieden wird.

Diese Aufgabe wird durch die kennzeichnenden Merkmale des Patentanspruches 1 gelöst. Danach macht die Erfindung zwar auch von einer Zeitablaufüberwachung Gebrauch. Im Gegenssatz zu der bekannten Lösung wird aber nicht im jeweiligen Ursprungsknoten bei externen Aufträgen die Rückantwort von dem jeweils anderen Knoten zeitlich überwacht, sondern die Zeitablaufüberwachung erfolgt jeweils im fremden Knoten durch Überwachung des Erledigungsfortganges der globalen Transaktion bzw. derer Teiltransaktion, und zwar dann, wenn ein Wartezustand gegeben ist, der durch eine andere globale Transaktion bzw. durch eine Teiltransaktion derselben bedingt ist, die auf eine externe Nachricht von einem anderen Knoten wartet.

Die Zeitablaufüberwachung erfaßt somit auch den Anlaß für den verursachten Wartezustand, wobei nur in den Fällen mit hinreichender Wahrscheinlichkeit für eine globale Verklemmung zurückgesetzt wird. Dies gilt insbesondere, wenn gemäß der Weiterbildung entsprechend Patentanspruch 2 die von der Zeitablaufüberwachung vorgegebene zulässige Wartedauer abhängig von die Erledigungszeit für eine Teiltransaktion beeinflussenden Systemgrößen, wie z. B. Kommunikationsgeschwindigkeit zwischen den Knoten oder Rechnerleistung, gewählt wird.

Der Aufwand für die Durchführung des Verfahrens gemäß der Erfindung ist gering und beschränkt sich im wesentlichen auf eine Reihe von Anzeigen in einem Verzeichnis für die laufenden Transaktionen bzw. Teiltransaktionen, das von Zeit zu Zeit überprüft wird. Einzelheiten hierzu enthalten die Patenansprüche 3 bis 6.

Nachfolgend sei die Erfindung anhand eines in der Zeichnung dargestellten Ausführungsbeispieles näher beschrieben. Im einzelnen zeigen

FIG 1 zwei Wartegraphen für zwei verschiedene Knoten eines Systems, die eine Schleife bilden,

FIG 2 den Aufbau der benötigten beiden Verzeichnisse für die Durchführung des Verfahrens gemäß der Erfindung und

FIG 3 ein Ablaufdiagramm zur Erläuterung des Verfahrens gemäß der Erfindung.

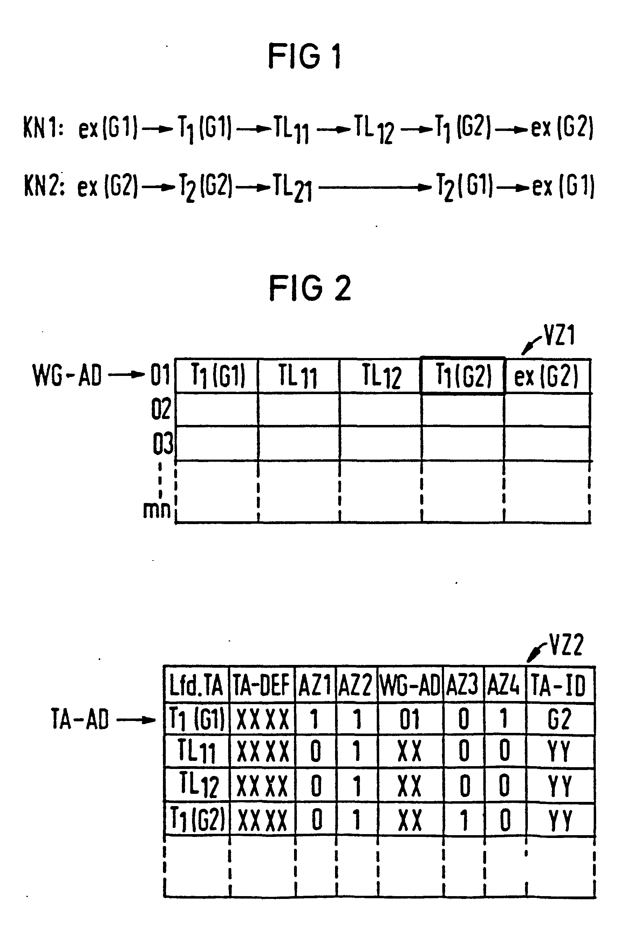

FIG 1 zeigt für zwei Knoten KN1 und KN2 die möglicherweise sich ergebenden Wartegraphen, wobei die einzelnen Pfeile die Bedeutung "wartet auf" und die gewählten Abkürzungen folgende Bedeutung haben:

$T_X(GJ)$ = Teiltransaktion einer globalen Transaktion J am Knoten X

$TL_{KL}$ = lokale Transaktion L am Knoten K

$ex(GM)$ = Stellvertreter für alle externen Transaktionen M aus der Sicht des jeweiligen Knotens.

Gemäß FIG 1 wartet also beispielsweise im Knoten KN1 die globale Transaktion G1 indirekt auf die globale Transaktion G2 und im Knoten KN2 die globale Transaktion G2 auf die globale Transaktion G1. Beide Wartegraphen bilden daher eine Schleife, die zur globalen Systemverklemmung führt, wenn sie nicht aufgetrennt wird.

Eine derartige Verklemmungsanalyse ist aber nur möglich, wenn wenigstens in einem der Knoten die Wartebeziehungen in allen übrigen Knoten des Systems bekannt sind. Das erfordert aber einen zusätzlichen Austausch von Warteinformationen zwischen den Knoten.

Das dem Verfahren gemäß der Erfindung zugrundeliegende Lösungsschema berücksichtigt zwar die grundlegenden Voraussetzungen der Schleifenbildung, verzichtet aber auf den Austausch von Warteinformationen zwischen den Knoten. Die Entscheidung kann daher nur von den im Knoten selbst vorliegenden Wartebeziehungen abgeleitet werden, wobei nicht der Ursprungsknoten einer globalen Transaktion maßgebend ist, sondern ein von einer Teiltransaktion dieser globalen Transaktion angesprochener Zielknoten.

Wird in einem solchen Zielknoten die Teiltransaktion einer globalen Transaktion, weil sie auf die Zuteilung einer Sperre wartet, in einen Wartegraphen eingebunden, an dessen Ende sich die Teiltransaktion einer anderen globalen Transaktion befindet, die außerdem auf eine Nachricht aus einem anderen Knoten wartet, dann erhöht sich mit der Zeit bei bestehender unveränderter Wartesituation die Wahrscheinlichkeit ganz erheblich, daß eine Warteschleife besteht und damit die Gefahr der globalen Systemverklemmung gegeben ist. Das Verfahren beruht damit gleichfalls auf einer Zeitablaufüberwachung, sie ist aber nicht auf den Ursprungsknoten, wie bei den bekannten Lösungen, bezogen, sondern auf den Zielknoten unter Berücksichtigung der dort bestehenden Wartebeziehungen. Das neue Verfahren mit Veitablaufüberwachung arbeitet daher viel effektiver.

FIG 2 zeigt im wesentlichen zwei Verzeichnisse, von denen das eine VZ1 in an sich bekannter Weise Aufschluß über die im Knoten bestehenden Wartebeziehungen gibt. Jede Zeile enthält z. B. in geketteter Reihenfolge die Angaben der einen Wartegraph bildenden Teiltransaktionen. Die Einträge der Zeile 1 entsprechen dabei z. B. dem in FIG 1 wiedergegebenen Wartegraphen für den Knoten KN1. Es handelt sich dabei um eine prinzipielle Darstellung ohne Berücksichtigung des jeweils benutzten Kettungsmechanismus, da solche allgemein bekannt sind.

Das letzte Glied einer solchen Kette kann dabei aus der Angabe der letzten Teiltransaktiom, also $T_1(G2)$, eines Wartegraphs oder aber bei in andere Knoten überleitenden globalen Transaktionen durch einen entsprechenden Hinweis, z. B. ex (G2), bestehen.

Das zweite Verzeichnis VZ2 beinhaltet eine Liste der im Knoten in Arbeit befindlichen oder laufenden Transaktionen. In der Spalte 1fd.TA sind daher in Anlehnung an den in FIG 1 für den Knoten KN1 dargestellten Wartegraph die einzelnen Teiltransaktionen dieses Wartegraphs untereinander eingetragen. Die Darstellung ist gleichfalls prinzipieller Natur und schließt auch die nichtserielle Abspeicherung ein. In der Regel sind die Eintragungen mit Definitionen TA-DEF für die einzelnen Transaktionen gekoppelt, was aber im vorliegenden Falle ohne Bedeutung ist. Wesentlich für die Erfindung sind dagegen die weiterhin gezeigten Anzeigen und Hinweise. Es sind dies:

AZ1: Art der Transaktion, wobei die Kennzeichnung "1" eine globale Transaktion anzeigt.

AZ2: Wartezustand der Transaktion, wobei das Kennzeichen "1" eine wartende Teiltransaktion anzeigt.

WG-AD: Zugriffsadresse für den Wartegraphen im Verzeichnis VZ1.

AZ3: Angabe des Arbeitsbereiches, wobei das Kennzeichen "1" eine extern arbeitende Transaktion anzeigt.

AZ4: Hinweis auf die Zeitablaufüberwachung, wobei die Kennzeichnung "1" anzeigt, daß die Zeitablaufüberwachung wirksam geschaltet ist.

TA-ID: Identifikation der das Ende des jeweiligen Wartegraphen bildenden Transaktion.

Alle Teiltransaktionen der von einem anderen Knoten herrührenden globalen Transaktionen werden danach in der Anzeige AZ1 mit "1" gekennzeichnet. Beim gewählten Beispiel ist das die Teiltransaktion $T_1(C1)$. Die Anzeige AZ2 kennzeichnet alle Teiltransaktionen des betrachteten Wartegraphen als wartend. Die der Teiltransaktion $T_1(G1)$ zugehörige Adresse O1 in der Spalte WG-AD kennzeichnet im Verzeichnis VZ1 die Zeile O1, so daß anhand dieser Adresse das letzte Glied des zugehörigen Wartegraphen ermittelt werden kann. Die Anzeige AZ3 ist im vorliegenden Falle lediglich für die Teiltransaktion $T_1(G2)$ auf "1" gesetzt, da diese z.Zt. auf eine Nachricht aus einem anderen Knoten wartet. Weiterhin ist unterstellt, daß die Zeitablaufüberwachung für die Teiltransaktion $T_1(G1)$ bereits läuft und diese mit der Identifikation G2 für die durch die Teiltransaktion $T_1(G2)$ am Ende des Wartegraphen gekennzeichnete Teiltransaktion G2 versehen ist.

Der Verfahrensablauf der Prüfung auf globale Verklemmungsgefahr des Systems gestaltet sich damit folgendermaßen:

Zunächst werden im Verzeichnis VZ2 die für die erste eingetragene Teiltransaktion vorliegenden Anzeigen überprüft. Interessant ist dabei nur, ob beide Anzeigen AZ1 und AZ2 gesetzt sind. Im anderen Falle sind die Voraussetzungen für eine mögliche globale Systemverklemmung nicht gegeben; denn handelt es sich lediglich um eine lokale Teiltransaktion, dann ist die örtliche Steuerung zur Verhinderung von Verklemmungen zuständig, und wenn die überprüfte Teiltransaktion nicht wartet, dann ist auch keine globale Verklemmung dadurch möglich.

Sind aber beide Anzeigen AZ1 und AZ2 gesetzt, dann wird mit der zugehörigen Adresse aus der Spalte WG-AD des Verzeichnisses VZ2 der zugehörige Wartegraph im Verzeichnis VZ1 überprüft und die letzte Teiltransaktion ermittelt und festgestellt, ob es eine globale Transaktion ist. Nur wenn letzteres zutrifft, besteht eine Überleitungsmöglichkeit zu einem anderen Knoten und damit möglicherweise eine globale Verklemmungsgefahr. Es ist daher weiterhin zu prüfen, ob diese Teiltransaktion auf eine Nachricht aus einem anderen Knoten wartet. Dazu sind zwei Varianten denkbar:

a)  Der Wartegraph beinhaltet am Ende bereits einen Hinweis ex(G2) auf das Warten auf Nachricht aus einem fremden Knoten oder aber

b)  ein derartiger Hinweis ist in der Anzeige AZ3 des Verzeichnisses VZ2 für die das Ende des Wartegraphs bildende Transaktion enthalten.

Im ersteren Falle können die weiteren Anzeige AZ4 und TA-ID unmittelbar zum Tragen kommen, im anderen Falle erst über den Umweg mit Prüfung der Anzeige AZ3 im Verzeichnis VZ1 für die im Verzeichnis VZ2 ermittelte Transaktion am Ende des Wartegraphs. Ist die Anzeige AZ4 auf "C" gesetzt und die Zeitablaufüberwachung noch nicht wirksam geschaltet, dann ist die Anzeige AZ4 auf "1" zu setzen.

Sind außer linearen Wartegraphen auch solche mit Baumstruktur zugelassen, dann können im Verzeichnis VZ1 für eine Transaktion auch mehrere Einträge vorliegen, die sich am Ende unterscheiden und alle von der Adresse WG-AD im Verzeichnis VZ2 erfaßt werden.

In jedem Falle ist mit dem Setzen der Anzeige AZ4 auf "1" die Identifikation, z. B. G2, für die auf externe Nachricht wartende letzte Teiltransaktion $T_1(G2)$ des Wartegraphen in der Spalte TA-ID einzutragen. Bei Baumstrukturen können es demzufolge auch die Identifikationen mehrerer Transaktionen sein. Das Merken der Identifikation bzw. der Identifikationen ist notwendig, da sich zwischenzeitlich der Wartezustand ändern und an die Stelle der im vorliegenden Fall gegebenen Transaktion G2 eine andere treten könnte. In diesem Falle wären nach Ablauf der Wartedauer die Wartebedingungen nicht mehr dieselben wie zu Beginn der Überwachung und damit die Voraussetzungen für das Rücksetzen einer Transaktion entfallen.

Ist die Anzeige AZ4 bereits auf "1" gesetzt, dann bedeutet dies bei einer Überprüfung im Abstand der vorgegebenen Wartedauer, daß die Wartedauer abgelaufen ist. Es ist dann nur noch zu prüfen, ob die bei der Überprüfung des Wartegraphen anhand des Verzeichnisses VZ1 festgestellte Identifikationsangabe noch mit der in Spalte TA-ID des Verzeichnisses VZ2 abgespeicherten Identifikation übereinstimmt, wobei bei Vorliegen einer Baumstruktur wiederum die Identifikationen aller Teiltransaktionen am Ende der betroffenen Äste zu berücksichtigen sind. Ergibt die Überprüfung eine Übereinstimmung für wenigstens eine der Identifikationen, dann besteht voraussetzungsgemäß begründeter Anlaß für die Gefahr einer globalen Systemverklemmung und eine geeignete Transaktion ist zurückzusetzen, damit die möglicherweise bestehende Warteschleife aufgetrennt wird.

Befindet sich der Hinweis für das Warten auf eine externe Nachricht in der Anzeige AZ3 des Verzeichnisses VZ2, dann ist nach Feststellung der letzten Teiltransaktion des Wartegraphen als Bestandteil einer globalen Transaktion diese im Verzeichnis VZ2 aufzusuchen und die zugehörigen Anzeigen AZ2 und AZ3 sind zu überprüfen, bevor die Anzeigen AZ4 und TA-ID der anfänglichen Teiltransaktion zum Tragen kommen.

Anstelle der periodischen Überprüfung der Einträge im Verzeichnis VZ2 in der vorgegebenen Wartedauer entsprechenden Abständen können die Eintragungen auch mit Zeitmarken versehen werden, die bei Wirksamschalten der Zeitablaufüberwachung gesetzt und bei jeder Überprüfung mit einer zentralen Zeituhr verglichen werden. Auch können zur Festlegung von verschiedenen Zeiten für die Wartedauer bei periodischer Überprüfung mit festen Zeitabständen gewünschte Vielfache dieser Zeitabstände in der Anzeige AZ4 eingetragen werden. Derartige Zeitmeßtechniken sind dem Fachmann allgemein geläufig, ebenso die Kentnisse über die notwendigen Kriterien für die Bemessung der Wartedauer.

Bei einer anderen Variante gemäß der Erfindung können auch die Anzeigen AZ4 und TA-ID zusammengelegt werden, wobei eine Markierung durch die Identifikation anzeigt, daß die Zeitablaufüberwachung wirksam geschaltet ist.

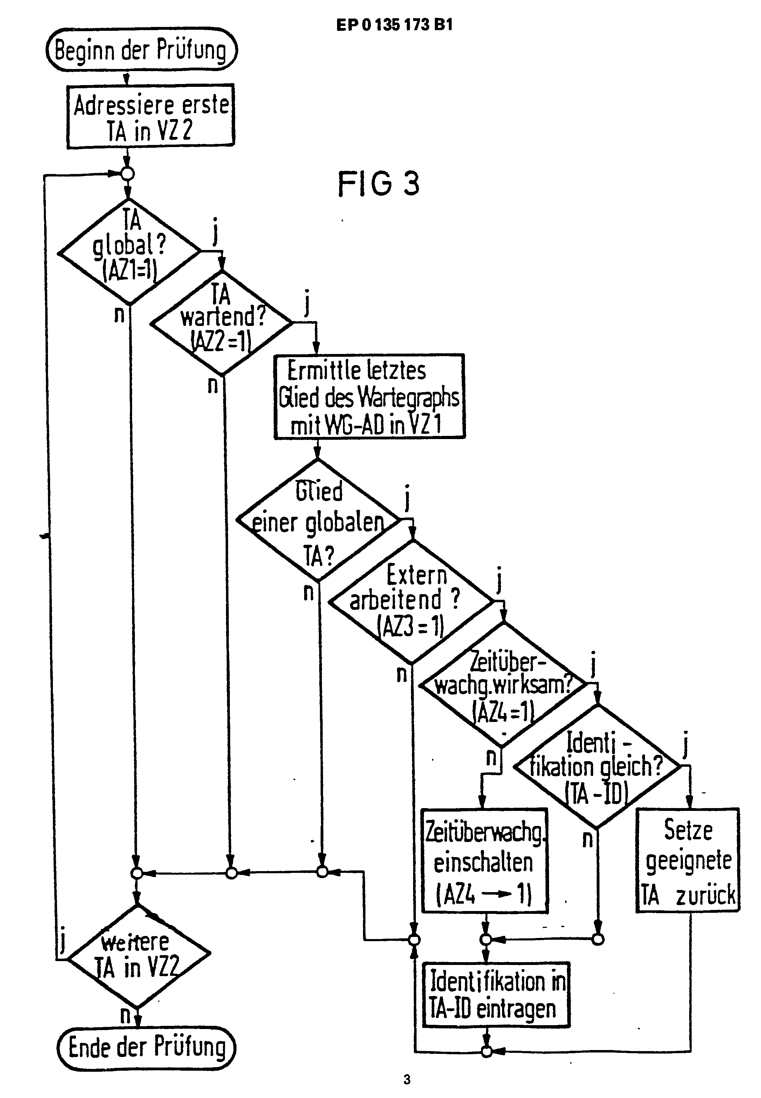

FIG 3 zeigt ein entsprechendes globales Flußdiagramm für das der Erfindung zugrundeliegende Verfahren, wie es vorangehend anhand von FIG 2 bereits näher erläutert ist, wobei die Zusätze in den einzelnen Entscheidungsrauten auf die einzelnen Anzeigen in den beiden Verzeichnissen VZ1 und VZ2 Bezug nehmen.

Das Verfahren der Erfindung läßt sich also in verschiedenen Varianten mit durchweg nur geringem Aufwand ohne überörtliche Kommunikation bezüglich der in den einzelnen Knoten des Systems bestehenden Wartebeziehungen verwirklichen. Sollte sich dabei ergeben, daß eine Transaktion zurückzusetzen ist, so kann dies dann unter Zugrundelegung geeigneter bekannter Strategien erfolgen.

## Patentansprüche

1. Verfahren zum Vermeiden von globalen Systemverklemmungen bei der Verarbeitung von globalen Transaktionen in verteilten Datenbank-Systemen mit mehreren Knoten, von denen jeder mit Einrichtungen für die Vergabe von Sperren an die lokalen Objekte, für das Prüfen und Verwalten von lokalen Wartebeziehungen laufender Transaktionen oder selbständiger Teile (Teiltransaktionen) derselben und für das Rücksetzen von Transaktionen ausgerüstet ist, durch Zeitablaufprüfungen, dadurch gekennzeichnet, daß in jedem Knoten (KN1) die auszuführenden Teiltransaktionen (z. B. $T_1(G1)$) der von einem fremden Knoten (z. B. KN2) stammenden globalen Transaktion (G1) als solche erfaßt und von Zeit zu Zeit auf ihren Wartezustand überprüft werden, daß für jede bei dieser Prüfung als im Wartezustand befindlich ermittelten Teiltransaktion, deren Wartegraph am Ende auf die Teiltransaktion (z. B. $T_1(G2)$) einer anderen globalen Transaktion (G2) hinweist, wobei diese letzte Teiltransaktion auf Nachricht aus einem anderen Knoten (z. B. KN2) wartet, die Zeitablaufüberwachung wirksam geschaltet wird und daß nach Ablauf der Überwachungszeit bei unverändertem Wartezustand eine den gegebenen Wartegraph ändernde Transaktion zurückgesetzt wird.

2. Verfahren nach Anspruch 1, dadurch gekennzeichnet, daß die von der Zeitablaufüberwachung vorgegebene zulässige Wartedauer von die Erledigungszeit für eine Transaktion beeinflussenden Systemgrößen (Kommunikationsgeschwindigkeit, Rechnerleistung) abhängig ist.

3. Anordnung zur Durchführung des Verfahrens nach Anspruch 1 oder 2 unter Verwendung eines Verzeichnisses (VZ1) mit Angaben über die lokalen Wartebeziehungen von Teiltransaktionen am eigenen Knoten mit Einrichtungen für das Verwalten und Überprüfen des Verzeichnisses, gekennzeichnet

- durch ein zweites Verzeichnis (V22) der im Knoten laufenden Teiltransaktionen mit Anzeigen über die Art der Teiltransaktion (AZ1), den Wartezustand (AZ2) der Teiltransaktion und das Wirksamschalten der Zeitablaufüberwachung (AZ4), sowie mit einem Adresseneintrag (WG-AD) für das erste Verzeichnis (VZ1) zur Ermittlung der jeweils letzten Teiltransaktion eines Wartegraphs und

- durch Einrichtungen zum Verwalten und Überprüfen des zweiten Verzeichnisses (VZ2) und zum Auslösen einer Transaktionsrücksetzung im Falle einer durch die Anzeigen angedeuteten globalen Systemverklemmung.

4. Anordnung nach Anspruch 3, gekennzeichnet durch eine Anzeige (AZ3) zur Kennzeichnung des zuständigen Arbeitsbereiches der das Ende des Wartegraphs bildende Teiltransaktion einer globalen Transaktion im zweiten Verzeichnisses (VZ2), die anhand des vom ersten Verzeichnis (VZ1) abgeleiteten Prüfergebnisses überprüft wird.

5. Anordnung nach Anspruch 3 oder 4, gekennzeichnet
- durch eine Anzeige (TA-ID) zur Identifikation der durch die das Ende eines Wartegraphs bildende und auf eine externe Nachricht wartende Teiltransaktion gekennzeichnete Transaktion im zweiten Verzeichnis (VZ2), die jeweils mit Wirksamschalten der Zeitablaufüberwachung anhand des vom ersten Verzeichnis (VZ1) abgeleiteten Prüfergebnisses gesetzt wird, und
- durch Einrichtungen zum Vergleich dieser Identifikation mit der bei einer nachfolgenden Überprüfung bei Ablauf der Wartedauer sich ergebenden Identifikation zur Steuerung des Auslösens einer Transaktionsrücksetzung bei Übereinstimmung.

6. Anordnung nach Anspruch 3 oder 4 und 5, dadurch gekennzeichnet, daß die Einleitung der Zeitablaufüberwachung durch Eintrag der Identifikation für die durch das Ende eines Wartegraphs bildende Teiltransaktion gekennzeichnete globale Transaktion in die zugehörige Anzeige (AZ4) gekennzeichnet wird.

7. Anordnung nach einem der Ansprüche 3 bis 6, dadurch gekennzeichnet, daß die Überprüfung der im zweiten Verzeichnis (VZ2) erfaßten laufenden Teiltransaktion periodisch in der vorgegebenen zulässigen Wartedauer entsprechenden Zeitabständen erfolgt.

## Claims

1. Method for avoiding global system deadlocks in the processing of global transactions in distributed data base systems having several nodes, each of which is equipped with devices for issuing locks to local objects, for testing and administering local wait relations of current transactions or independent parts (subtransactions) of these and for resetting transactions, by means of timeout checks, characterized in that in each node (KN1) the subtransactions (e.g. $T_1(G1)$) to be executed from the global transaction (G1) originating from an external node (e.g. KN2) are detected as such and are checked for their wait status from time to time, that for each subtransaction determined in this test as being in a wait status, and the wait graph of which at the end points to the subtransaction (e.g. $T_1(G2)$) of another global transaction (G2), this latter subtransaction waiting for information from another node (e.g. KN2), the timeout monitoring is switched to be active and that, after the monitoring time has elapsed, with the wait status unchanged, a transaction changing the given wait graph is reset.

2. Method according to Claim 1, characterized in that the permissible waiting time predetermined by the timeout monitor is dependent on system variables influencing the handling time for a transaction (speed of communication, computer capacity).

3. Arrangement for carrying out the method according to Claim 1 or 2, using a list (VZ1) with information about the local wait relations of subtransactions at the own node with devices for the administering and checking of the list, characterized

- by a second list (VZ2) of the subtransactions running in the node with flags of the type of subtransaction (AZ1), the wait status (AZ2) of the subtransaction and the activating of the timeout monitor (AZ4), and with an address entry (WG-AD) for the first list (VZ1) for determining the respectively last subtransaction of a wait graph and

- by facilities for administering and checking the second list (VZ2) and for enabling a transaction reset in the case of a global system deadlock indicated by the flags.

4. Arrangement according to Claim 3, characterized by a flag (AZ3) for identifying the relevant work area of the subtransaction forming the end of the wait graph of a global transaction in the second list (VZ2) which is checked by means of the test result derived from the first list (VZ1).

5. Arrangement according to Claim 3 or 4, characterized

- by flag (TA-ID) for identifying the transaction identified by the subtransaction forming the end of a wait graph and waiting for an external message, in the second list (VZ2), which is in each case set when the timeout monitor is activated on the basis of the test result derived from the first list (VZ1), and

- by facilities for comparing this identification with the identification resulting from a subsequent check when the wait time has elapsed, for controlling the enabling of a transaction reset in the case of correspondence.

6. Arrangement according to Claims 3 or 4 and 5, characterized in that the initiation of the timeout monitoring is identified by entering the identification for the global transaction, identified by the subtransaction forming the end of a wait graph, into the associated flag (AZ4).

7. Arrangement according to one of Claims 3 to 6, characterized in that the current subtransaction covered in the second list (VZ2) is periodically checked at time intervals corresponding to the predetermined permissible wait time.

## Revendications

1. Procédé pour éviter des blocages généraux du système lors du traitement de transactions globales dans des système de banques de données partagés possédant plusieurs noeuds dont chacun est équipé de dispositifs pour l'attribution de verrous aux objets locaux, pour le contrôle et la gestion de relations d'attente locales de transactions en cours ou de parties autonomes de celles-ci (transactions partielles) et pour reporter des transactions, par des contrôles de l'expiration de durées, caractérisé en ce que, dans chaque noeud (KN1), les transactions partielles (par exemple $T_1(G1)$) â exécuter d'une transaction globale (G1) originaire d'un noeud étranger (par exemple (KN2), sont détectées en tant que telles et sont contrôlées de temps en temps sur leur état d'attente, que la surveillance de l'expiration de durée est rendue opérante pour chaque transaction partielle dont il a été déterminé, lors de ce contrôle, qu'elle se trouve en état d'attente, transaction partielle dont le graphe d'attente renvoie à la fin à la transaction partielle (par exemple ($T_1(G2)$) d'une autre transaction globale (G2), cette dernière transaction partielle étant en attente d'un message d'un autre noeud (par exemple KN2), et que, après l'expiration du temps de surveillance, si l'état d'attente est inchangé, une transaction changeant le graphe d'attente donné est reporté.

2. Procédé selon la revendication 1, caractérisé en ce que la durée d'attente admissible, préfixée par la surveillance de l'expiration de durée, dépend du temps d'exécution de grandeurs du système (vitesse de communication, puissance de calculateur) influençant une transaction.

3. Dispositif pour la mise en oeuvre du procédé selon la revendication 1 ou 2, utilisant un répertoire (VZ1) avec des indications sur les relations d'attente locales de transactions partielles au noeud propre, avec des dispositifs pour la gestion et le contrôle du répertoire, caractérisé

- par un second répertoire (VZ2) des transactions partielles en cours dans le noeud, avec des indicateurs sur la nature de la transaction partielle (AZ1), l'état d'attente (AZ2) de la transaction partielle et la mise en action de la surveillance d'expiration de durée (AZ4), ainsi qu'avec une inscription d'adresse (WG-AD) pour le premier répertoire (VZ1) en vue de la détermination de la dernière transaction partielle d'un graphe d'attente et

- par des dispositifs pour la gestion et le contrôle du second répertoire (VZ1) ainsi que pour déclencher un report de transaction au cas où les indicateurs signalent le risque d'un blocage général du système.

4. Dispositif selon la revendication 3, caractérisé par un indicateur (AZ3) pour désigner la zone de fonctionnement concernée de la transaction partielle formant la fin du graphe d'attente et constituant un élément d'une transaction globale dans le second répertoire (VZ2), qui est contrôlée à l'aide du résultat de contrôle dérivé du premier répertoire (VZ1).

5. Dispositif selon la revendication 3 ou 4, caractérisé

- par un indicateur (TA-ID) pour l'identification de la transaction, dans le second répertoire (VZ2), qui est désignée par la transaction partielle formant la fin du graphe d'attente et qui est elle-même en attente d'un message externe, indicateur qui est positionné à chaque mise en action de la surveillance d'expiration de durée d'après le résultat de contrôle dérivé du premier répertoire (VZ1), et

- par des dispositifs pour comparer cette identification avec l'identification obtenue à l'expiration de la durée d'attente lors d'un contrôle consécutif, afin de commander le déclenchement d'un report de transaction en cas de concordance.

6. Dispositif selon la revendication 3 ou 4 et 5, caractérisé en ce que l'enclenchement de la surveillance d'expiration de durée est marqué par l'inscription de l'identification, dans l'indicateur (AZ4) correspondant, de la transaction globale désignée par la transaction partielle formant la fin d'un graphe d'attente.

7. Dispositif selon une des revendications 3 à 6, caractérisé en ce que le contrôle de la transaction partielle en cours, contenue dans le second répertoire (VZ2), s'effectue périodiquement avec des intervalles de temps correspondant à la durée d'attente admissible, préfixée.

# FIG 1

KN1: $ex(G1) \rightarrow T_1(G1) \rightarrow TL_{11} \rightarrow TL_{12} \rightarrow T_1(G2) \rightarrow ex(G2)$

KN2: $ex(G2) \rightarrow T_2(G2) \rightarrow TL_{21} \longrightarrow T_2(G1) \rightarrow ex(G1)$

# FIG 2

VZ1

WG-AD →

| | $T_1(G1)$ | $TL_{11}$ | $TL_{12}$ | $T_1(G2)$ | $ex(G2)$ |
|---|---|---|---|---|---|
| 01 | | | | | |
| 02 | | | | | |
| 03 | | | | | |
| mn | | | | | |

VZ2

TA-AD →

| Lfd.TA | TA-DEF | AZ1 | AZ2 | WG-AD | AZ3 | AZ4 | TA-ID |
|---|---|---|---|---|---|---|---|
| $T_1(G1)$ | XX XX | 1 | 1 | 01 | 0 | 1 | G2 |
| $TL_{11}$ | XX XX | 0 | 1 | XX | 0 | 0 | YY |
| $TL_{12}$ | XX XX | 0 | 1 | XX | 0 | 0 | YY |
| $T_1(G2)$ | XX XX | 0 | 1 | XX | 1 | 0 | YY |
| | | | | | | | |
| | | | | | | | |

EP 0 135 173 B1

# FIG 3

Beginn der Prüfung

Adressiere erste TA in VZ 2

TA global? (AZ1=1)

TA wartend? (AZ2 =1)

Ermittle letztes Glied des Wartegraphs mit WG-AD in VZ1

Glied einer globalen TA?

Extern arbeitend ? (AZ3 = 1)

Zeitüber- wachg.wirksam? (AZ4 =1)

Identi- fikation gleich? (TA-ID)

Zeitüberwachg. einschalten (AZ4 → 1)

Setze geeignete TA zurück

Identifikation in TA-ID eintragen

weitere TA in VZ2

Ende der Prüfung

3